# EUROPÄISCHE PATENTSCHRIFT

(11) **EP 0 745 606 B1**
(45) Veröffentlichungstag und Bekanntmachung des Hinweises auf die Patenterteilung: **28.07.2004**
(21) Anmeldenummer: 96108138.7
(22) Anmeldetag: 22.05.1996
(51) Int. Cl.: C07F 17/00, C07F 7/08, C07F 3/00

(54) **Verfahren zur Herstellung von verbrückten Metallocenkomplexen**
Process for the preparation of bridged metallocene complexes
Procédé de préparation de complexes metallocènes pontées

(30) Priorität: 31.05.1995 DE 19519884
(43) Veröffentlichungstag der Anmeldung: 04.12.1996
(73) Patentinhaber: Basell Polyolefine GmbH, 50389 Wesseling (DE)
(72) Erfinder: Langhauser, Franz, Dr., 67098 Bad Dürkheim (DE); Fischer, David, Dr., 67161 Gönnheim (DE); Schweier, Günther, Dr., 67159 Friedelsheim (DE); Brintzinger, Hans-Herbert, Prof. Dr., 8274 Taegerswilen (CH); Damrau, Hans-Robert-Hellmuth, 78462 Konstanz (DE)

(56) Entgegenhaltungen:
- EP-A- 0 320 762
- EP-A- 0 480 390
- EP-A- 0 669 340
- WILD ET AL: "ansa-metallocene derivatives. iv. synthesis and molecular structure of chiral ansa-titanocene derivatives with bridged tetrahydroindenyl ligands" JOURNAL OF ORGANOMETALLIC CHEMISTRY, ELSEVIER-SEQUOIA S.A. LAUSANNE, CH, Bd. 232, 1982, Seiten 233-247, XP002089631 ISSN: 0022-328X
- WILD F R W P ET AL: "SYNTHESIS AND CRYSTAL STRUCTURE OF A CHIRAL ANSA-ZIRCONOCENE DERIVATIVE WITH ETHYLENE-BRIDGED TETRAHYDROINDENYL LIGANDS" JOURNAL OF ORGANOMETALLIC CHEMISTRY, ELSEVIER SEQUOIA S.A., LAUSANNE, CH, Bd. 288, 1985, Seiten 63-67, XP001023116

## Beschreibung

Die vorliegende Erfindung betrifft Verfahren zur Herstellung von Metallocenkomplexen der allgemeinen Formel I 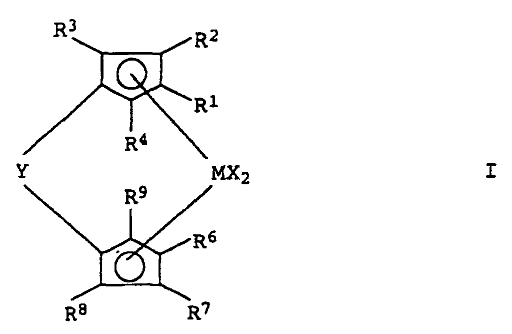 in der die Substituenten folgende Bedeutung haben:
- M: Titan, Zirkonium, Hafnium, Vanadium, Niob oder Tantal,
- X: Fluor, Chlor, Brom, Iod, Wasserstoff, C₁- bis C₁₀-Alkyl, C₆- bis C₁₅-Aryl oder -OR⁵,
- wobei R⁵: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
- R¹ bis R⁴ und R⁶ bis R⁹: Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁰)₃ mit
- R¹⁰: C₁- bis C₁₀-Alkyl, C₆- bis C₁₅-Aryl oder C₃- bis C₁₀-Cycloalkyl,
- Y: für 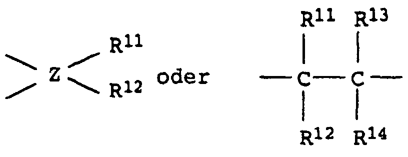 steht,
- wobei Z: Silicium, Germanium, Zinn oder Kohlenstoff bedeutet, und
- R¹¹, R¹², R¹³, R¹⁴: Wasserstoff, C₁- bis C₁₀-Alkyl, C₃- bis C₁₀-Cycloalkyl oder C₆- bis C₁₅-Aryl, wobei gegebenenfalls auch zwei benachbarte Reste gemeinsam für 4 bis 15 C-Atome aufweisende cyclische Gruppen stehen können.

Weiterhin betrifft die vorliegende Erfindung Verbindungen der allgemeinen Formel II 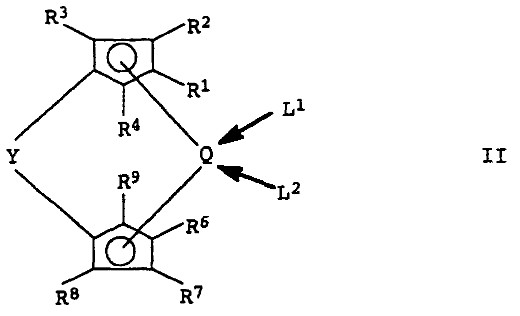 in der
- Q: für Beryllium, Magnesium, Calcium, Strontium oder Barium steht und
- L¹ und L²: Lewis-Basen bedeuten,
sowie Verfahren zur Herstellung derartiger Verbindungen II und die Verwendung der Verbindungen II zur Herstellung der Metallocenkomplexe I.

Verbrückte Metallocenkomplexe eignen sich insbesondere als Katalysatoren bei der Herstellung von Polyolefinen.

Zur Herstellung von Metallocenkomplexen werden üblicherweise Cyclopentadien oder substituierte Cyclopentadiene mit metallorganischen Reagenzien wie Lithiumalkylen oder Grignard Reagenzien oder Metallhydriden wie Kaliumhydrid oder Alkalimetallen wie Natrium umgesetzt. Solche Reaktionen sind an sich bekannt und z.B. in F.R.W.P. Wild, L. Zsolnai, G. Huttner, H. H. Brintzinger, J. Organomet. Chem. 232 (1982) S. 233 bis 247 oder US-A 5,359,105 beschrieben. Die daraus erhaltenen Cyclopentadienyl-Metallverbindungen können z.B. mit Halogeniden der Gruppe IVB des Periodensystems zu den entsprechenden, gegebenenfalls verbrückten Metallocenkomplexen umgesetzt werden. Auch diese Reaktionen sind an sich bekannt und beispielsweise in EP-A 320 762 oder US-A 5,302,733 beschrieben.

Insbesondere bei dem Schritt der Synthese, bei der aus einem (verbrückten) Bis-cyclopentadienyl Dianion die entsprechende Komplexverbindung hergestellt wird, sind die Ausbeuten üblicherweise schlecht bis unbefriedigend. Darüber hinaus sind die Reagenzien zur Herstellung teilweise teuer (Methyllithium) und unter Sicherheitsaspekten bedenklich (Kaliumhydrid). Bei Verwendung von Lithiumalkylen bildet sich durch Umsetzung mit den Übergangsmetallchloriden Lithiumchlorid, das sehr schwer abtrennbar ist und oft als Verunreinigung im Produkt verbleibt.

Aufgabe der vorliegenden Erfindung war es daher, einen Syntheseweg für Metallocenkomplexe zu finden, der sowohl befriedigende Ausbeuten liefert, als auch vom Sicherheitsaspekt und von der Kostenseite her eine deutliche Verbesserung darstellt.

Demgemäß wurde ein Verfahren zur Herstellung von Metallocenkomplexen der allgemeinen Formel I gefunden, wobei man Verbindungen der allgemeinen Formel II 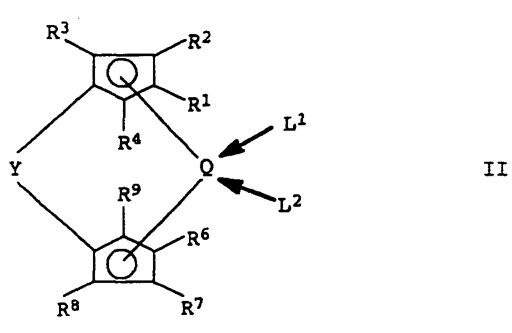 in der
- Q: für Beryllium, Magnesium, Calcium, Strontium oder Barium steht, und
- L¹ und L²: Lewis-Basen bedeuten
mit Verbindungen der allgemeinen Formel III 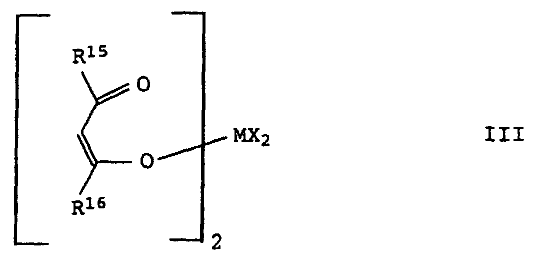 in der
- R¹⁵ und R¹⁶: C₁- bis C₁₀-Alkyl, C₃- bis C₁₀-Cycloalkyl oder C₆- bis C₁₅-Aryl bedeuten,
umsetzt.

Außerdem wurden Verbindungen der allgemeinen Formel II gefunden sowie Verfahren zur Herstellung derartiger Verbindungen II und die Verwendung der Verbindungen II zur Herstellung der Metallocenkomplexe I.

Bevorzugt wird das erfindungsgemäße Verfahren zur Herstellung von Metallocenkomplexen der allgemeinen Formel I verwendet, in der
- M: Titan, Zirkonium oder Hafnium bedeutet,
- X: Chlor oder Methyl,
- R¹ bis R⁴ und R⁶ bis R⁹: Wasserstoff, C₁ bis C₁₀-Alkyl oder wobei zwei benachbarte Reste gemeinsam für 4 bis 15 C-Atome, insbesondere 8 bis 12 C-Atome aufweisende cyclische Gruppen stehen
- Z: für Silicium oder Kohlenstoff steht und
- R¹¹, R¹², R¹³, R¹⁴: Wasserstoff oder C₁- bis C₄-Alkyl bedeuten.

Beispiele für besonders bevorzugte Metallocenkomplexe I sind u.a. Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Ethylenbis(-2-methylindenyl)-zirkoniumdichlorid, Ethylenbis(-2-methylindenyl)-hafniumdichlorid, Ethylenbis(-2-methylbenzindenyl)-zirkoniumdichlorid, Ethylenbis(-2-methylbenzindenyl)-hafniumdichlorid, Dimethylsilandiylbis(-3-tert.butyl-5-methylcyclopentadienyl)-zirkoniumdichlorid, Dimethylsilandiylbis(-3-tert.butyl-5-ethylcyclopentadienyl)-zirkoniumdichlorid, Dimethylsilandiylbis(-3-tert.butyl-5-methylcyclopentadienyl)-dimethylzirkonium, Dimethylsilandiylbis(-2-methylindenyl)-zirkoniumdichlorid, Dimethylsilandiylbis(-2-isopropylindenyl)-zirkoniumdichlorid, Dimethylsilandiylbis(-2-tert.-butylindenyl)-zirkoniumdichlorid, Diethylsilandiylbis(-2-methylindenyl)-zirkoniumdibromid, Dimethylsilandiylbis(-2,5-dimethylcyclopentadienyl)-zirkoniumdichlorid, Dimethylsilandiylbis(-2-ethyl-5-isopropylcyclopentadienyl)-zirkoniumdichlorid, Dimethylsilandiylbis(-2-methylbenzindenyl)-zirkoniumdichlorid, Dimethylsilandiylbis(-2-methylindenyl)-hafniumdichlorid und Isopropylidencyclopentadienylfluorenylzirkoniumdichlorid.

Bei dem erfindungsgemäßen Verfahren werden Verbindungen der allgemeinen Formel II 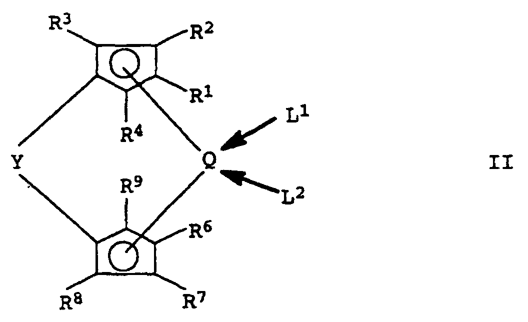 mit Verbindungen der allgemeinen Formel III 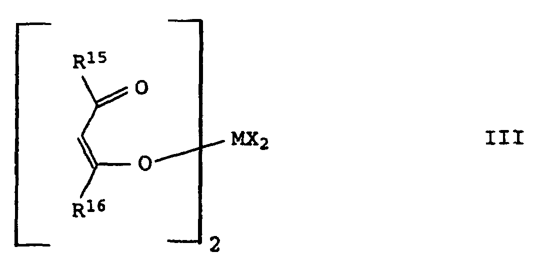 umgesetzt.

Von den Verbindungen der allgemeinen Formel II sind diejenigen bevorzugt, in denen
- Q: für Magnesium steht
und die Reste R¹ bis R⁴ sowie R⁶ bis R⁹ und Y die bei den Metallocenkomplexen I aufgeführten bevorzugten Bedeutungen haben.

Als Lewis-Basen L¹ und L² sind prinzipiell alle neutralen nucleophilen Reagentien geeignet, beispielsweise Amine, Phosphine, Ether und Sulfide; die Lewis-Basen können mono-, bi- oder polyfunktional sein. Besonders bevorzugt sind L¹ und L² gleich und stehen für lineare oder insbesondere cyclische Ether, vorzugsweise für Tetrahydrofuran (THF).

Von den Verbindungen der allgemeinen Formel III sind diejenigen bevorzugt, in denen
- R¹⁵ und R¹⁶: für C₁- bis C₆-Alkyl stehen, insbesondere sind die Reste R¹⁵ und R¹⁶ gleich und stehen für Methyl.

Bezüglich der bevorzugten Bedeutung von M und X sei auf das bei den Metallocenkomplexen I Gesagte verwiesen.

Eine ganz besonders bevorzugte Verbindung der Formel III ist Bis(acetylacetonato)zirkondichlorid.

Verbindungen der allgemeinen Formel III sowie Verfahren zu ihrer Herstellung sind an sich bekannt und beispielsweise in T.J. Pinnavia et al., Inorg. Chem. 7(3) (1968), S. 502 bis 508, beschrieben.

Die Umsetzung der Verbindungen II mit den Verbindungen III kann bei Temperaturen im Bereich von -80°C bis +160°C, vorzugsweise von 0°C bis 120°C erfolgen, vorzugsweise arbeitet man in einem organischen Lösungsmittel, bevorzugt in aromatischen Kohlenwasserstoffen wie Toluol oder Ethylbenzol. Die Reaktionszeit kann 1 bis 48 Stunden betragen. Es hat sich als besonders geeignet erwiesen, wenn das molare Verhältnis von II zu III im Bereich von 0,8:1 bis 1,2:1 liegt.

Die Aufarbeitung des entstandenen Metallocenkomplexes I ist an sich unkritisch und kann beispielsweise durch Filtration, gegebenenfalls unter Zuhilfenahme eines Filtrationshilfsmittels wie Kieselgur, erfolgen.

Verbindungen der allgemeinen Formel II sind neu und beispielsweise nach folgendem Verfahren herstellbar:

Verbindungen der allgemeinen Formel IV 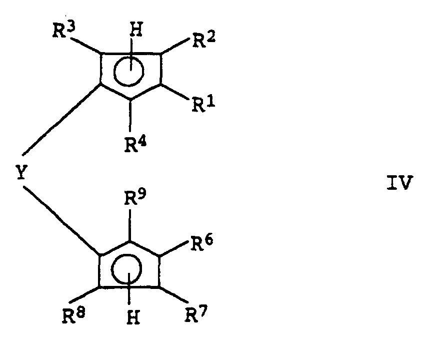 können mit Verbindungen der allgemeinen Formel V

R¹⁷ - Q - R¹⁸ V

und mit Lewis-Basen L¹ und L² umgesetzt werden.

Bezüglich der bevorzugten Bedeutung der Reste R¹ bis R⁴ und R⁶ bis R⁹ sowie Y, Q und auch der Lewis-Basen L¹ und L² sei auf das bereits Gesagte verwiesen.

Die Reste R¹⁷ und R¹⁸ in der allgemeinen Formel V stehen für Wasserstoff, C₁- bis C₁₀-Alkyl, C₃- bis C₁₀-Cycloalkyl, C₆- bis C₁₅-Aryl, Alkylaryl oder Arylalkyl mit jeweils 1 bis 10 C-Atomen im Alkylrest und 6 bis 20 C-Atomen im Arylrest. Bevorzugt sind R¹⁷ und R¹⁸ gleich und stehen für C₁- bis C₆-Alkyl.

Die Umsetzung von Verbindungen der Formel IV mit Verbindungen der Formel V kann in organischen Lösungsmitteln wie aliphatischen oder aromatischen Kohlenwasserstoffen, beispielsweise Heptan oder Petroleumbenzin, erfolgen, die Temperaturen können im Bereich von -80°C bis +160°C liegen, vorzugsweise von 20°C bis 120°C. Die Reaktionszeit kann 1 bis 48 Stunden betragen. Es hat sich als besonders geeignet erwiesen, wenn das molare Verhältnis von IV zu V im Bereich von 0,8:1 bis 1,2:1 liegt. Anschließend gibt man die Lewis-Basen L¹ und L² dazu, vorzugsweise bei Temperaturen im Bereich von -10 bis +100°C. Das molare Verhältnis von L¹ und L² zu V beträgt vorzugsweise 2:1 bis 40:1, das molare Verhältnis von L¹ und L² zu IV liegt bevorzugt im Bereich von 2:1 bis 40:1. Die entstandene Verbindung II kann dann abfiltriert und getrocknet werden.

Verbindungen der allgemeinen Formel IV sowie Verfahren zu ihrer Herstellung sind an sich bekannt und beispielsweise in W.A. Hermann et al., Angew. Chemie 101 (1989), S. 1536 bis 1538, und W. Spaleck et al., New J. Chem. 14 (1990), S. 499 bis 503, beschrieben.

Die Verbindungen II eignen sich zur Herstellung von Metallocenkomplexen der allgemeinen Formel I. Das erfindungsgemäße Verfahren zur Herstellung von Metallocenkomplexen I zeichnet sich durch hohe Ausbeuten, geringes Sicherheitsrisiko und niedrige Kosten aus.

### Beispiele

### Beispiel 1

### Herstellung von Dimethylsilandiylbis(3-tert.butylcyclopentadienyl)zirkoniumdichlorid I1

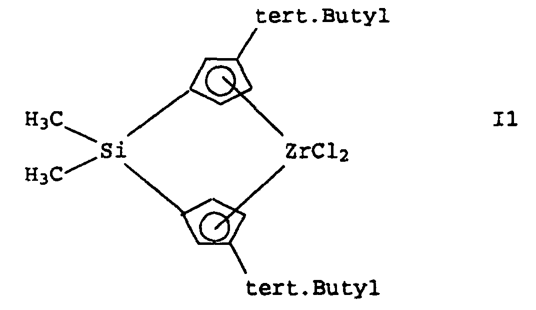

### Beispiel 1a:

### Herstellung von Dimethylsilandiylbis (3-tert.butylcyclopentadienyl)magnesium * 2THF II1

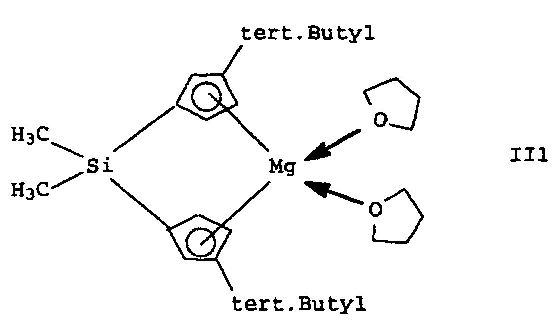

10,5 ml (10,5 mmol) einer 1molaren Lösung von Dibutylmagnesium (V1) in Heptan wurden zu 200 ml absolutem Heptan gegeben. Unter Rühren und bei Raumtemperatur wurden hierzu innerhalb von 15 Minuten 3,14 g (10,5 mmol) Dimethylsilandiylbis(3-tert.butylcyclopentadien (IV1) , gelöst in 30 ml Heptan, gegeben.

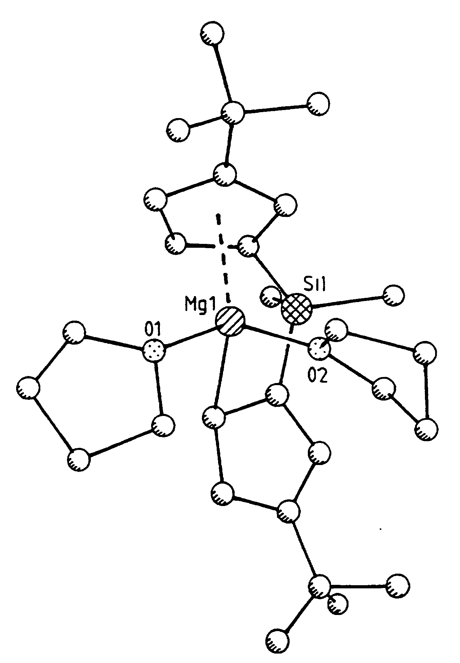

Anschließend wurde die Reaktionslösung zum Sieden erhitzt. Nach 12 Stunden am Rückfluß wurde auf die Hälfte der Lösungsmittelmenge eingeengt und 1,8 ml (22 mmol) Tetrahydrofuran zugegeben. Das so erhaltene Reaktionsgemisch wurde für 12 h auf -30°C gekühlt. Anschließend wurde der weiße Niederschlag über eine Glasfilterfritte unter Inertgas kalt abfiltriert und 2 h bei Raumtemperatur und 0,1 mbar getrocknet. Man erhielt 4 g (8,6 mmol, 82 %) des Magnesocens II1 (vgl. Fig. 1: Kristallstruktur von II1).

| ¹H-NMR-Spektrum interner Standard C₆D₆ (7,15 ppm), 250 MHz | | |
|---|---|---|
| Chem. Verschiebung | Mult. | Zuordnung |
| 6,59-6,18 | m | -C₅H₃ |
| 6,18-5,6 | b | |
| 3,75 | m, 8 | THF |
| 1,85 | m, 8 | THF |
| 1,50-1,30 | m | -C(CH₃)₃ |
| 1,30-1,10 | b | |
| 0,42 | b | -Si(CH₃)₂ |
| 0,30-0,15 | m | |

### Beispiel 1b: Herstellung von I1

0,76 g (2,12 mmol) Bis(acetylacetonato)zirkoniumdichlorid (III1) wurden in 100 ml Toluol gelöst. Unter Rühren und bei Raumtemperatur wurden hierzu 1,00 g (2,12 mmol) des Magnesocens II1, gelöst in 40 ml Toluol gegeben. Anschließend wurde für 8 Stunden auf 80°C erhitzt.

Nach dem Abkühlen auf Raumtemperatur wurde der entstandene Niederschlag über eine mit ausgeheiztem Kieselgur beschickte Fritte filtriert und das Filtrat vollständig vom Lösungsmittel befreit. Anschließend wurde das Filtrat in 50 ml Pentan aufgenommen, erneut filtriert und auf -80°C gekühlt. Nach 24 h wurde das ausgefallene Produkt abfiltriert und 2 h bei Raumtemperatur und 0,1 mbar getrocknet. Man erhielt 0,78 g (1,70 mmol, 80 %) der Verbindung I1.

| ¹H-NMR-Spektrum interner Standard CDCl₃ (7.26 ppm) , 250 MHz | | |
|---|---|---|
| rac | meso | Zuordnung |
| 0,19 (s, 6) | 0,08 (s, 3) | -Si(CH₃)₂ |
| | 0,29 (s, 3) | |
| 1,39 (s, 18) | 1,45 (s, 18) | -C(CH₃)₃ |
| 5,67 (m, 4) | 5,54 (pt, 2) | Cp-H |
| | 5,87 (pt, 2) | |
| 6,72 (pt, 2) | 6,84 (pt, 2) | Cp-H |
| pt = pseudotriplett | | |

### Beispiel 2

### Herstellung von Dimethylsilandiylbis(2-methylbenzindenyl)zirkoniumdichlorid I2

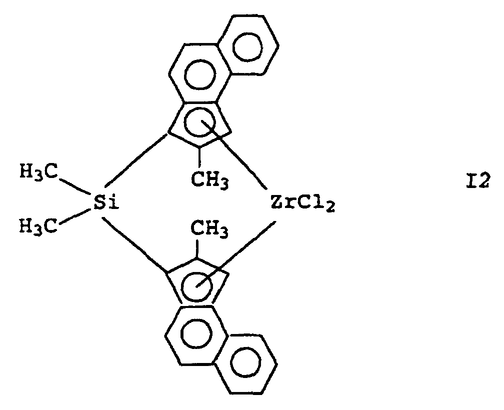

### Beispiel 2a

### Herstellung von Dimethylsilandiylbis(2-methylbenzindenyl)magnesium * 2THF II2

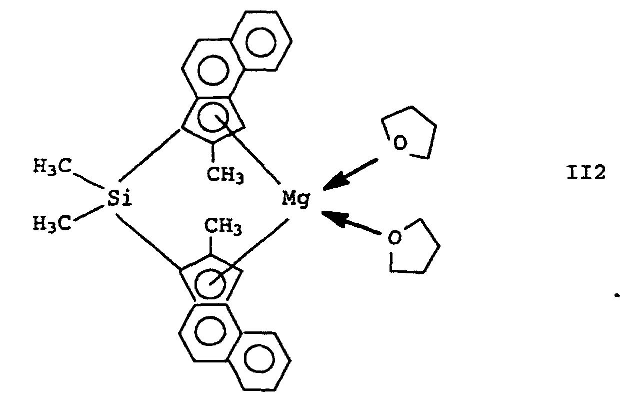

Es wurde analog Beispiel 1a gearbeitet, jedoch wurden 9,2 ml (9,2 mmol) einer 1molaren Lösung von Dibutylmagnesium (V1) in Heptan und 3,83 g (9,2 mmol) Dimethylsilandiylbis(2-methylbenzindenyl) (IV2), gelöst in 50 ml Heptan, eingesetzt. Man erhielt 4,6 g (7,8 mmol, 85 %) des Magnesocens II2.

| ¹H-NMR-Spektrum interner Standard C₆D₆ (7,15 ppm), 250 MHz | | |
|---|---|---|
| Chem. Verschiebung | Mult. | Zuordnung |
| 6,20-8,50 | m, 14 | |
| 2,95 | m, 8 | THF |
| 0,85 | m, 8 | THF |
| 1,70 | sb | Cp-CH₃ |
| 2,45 | sb | |
| 0,30/0,25/0,18 | sb | -Si(CH₃)₂ |
| sb = singulett, breit | | |

### Beispiel 2b

### Herstellung von I2

0,185 g (0,51 mmol) Bis(acetylacetonato)zirkoniumdichlorid (III1) wurden in 60 ml Toluol gelöst. Unter Rühren und bei Raumtemperatur wurden hierzu 0,3 g (0,51 mmol) des Magnesocens II2, gelöst in 20 ml Toluol gegeben. Anschließend wurde für 8 Stunden auf 80°C erhitzt. Nach dem Abkühlen auf Raumtemperatur wurde das Lösungsmittel am Ölpumpenvakuum vollständig entfernt und der Rückstand mit 100 ml Toluol für 8 Stunden extrahiert. Nach erneutem Entfernen des Lösungsmittels am Ölpumpenvakuum erhielt man 0,26 g (0,45 mmol, 89 %) der Verbindung I2.

| ¹H-NMR-Spektrum interner Standard CDCl₃ (7,26 ppm), 250 MHz | | |
|---|---|---|
| Chem. Verschiebung | Mult. | Zuordnung |
| 1,34 | s, 6 | -Si(CH₃)₂ |
| 2,35 | s, 6 | Cp-CH₃ |
| 7,14-7,96 | m, 14 | |

### Vergleichsbeispiel V1

### Herstellung von I2

Bei Raumtemperatur wurden zu einer Suspension von 2,8 g (70 mmol) Kaliumhydrid in 50 ml THF 7,0 g (16,7 mmol) Dimethylsilandiylbis(2-methylbenzinden), gelöst in 120 ml THF, gegeben. Anschließend wurde für 8 Stunden bei Raumtemperatur gerührt. Die überstehende Lösung wurde zu einer Lösung von 3,9 g (16,7 mmol) ZrCl₄ in 80 ml THF gegeben. Diese Mischung wurde für 72 Stunden bei Raumtemperatur gerührt, anschließend filtriert, dann wurde das Lösungsmittel bei 0,1 mbar vollständig entfernt und der erhaltene Rückstand mit 140 ml Toluol versetzt und für 12 Stunden gerührt. Der verbliebene mikrokristalline Niederschlag wurde abfiltriert und nacheinander mit 15 ml Toluol, 20 ml THF und 10 ml Methylenchlorid gewaschen. Dann wurde 4 Stunden bei Raumtemperatur und 0,1 mbar getrocknet. Man erhielt 3,4 g (5,8 mmol, 35 %) der Verbindung I2.

## Patentansprüche

1. Verfahren zur Herstellung von Metallocenkomplexen der allgemeinen Formel I 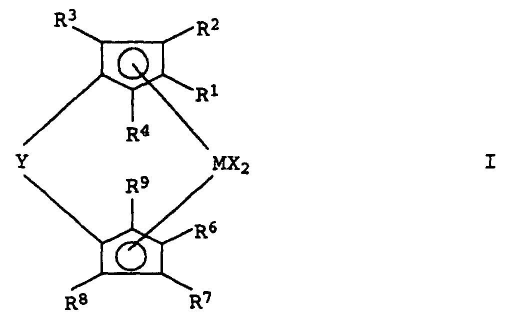 in der die Substituenten folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl oder -OR⁵,
wobei R⁵ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R¹ bis R⁴ und R⁶ bis R⁹ Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁰)₃ mit
R¹⁰ C₁- bis C₁₀-Alkyl, C₆- bis C₁₅-Aryl oder C₃- bis C₁₀-Cycloalkyl,
Y für 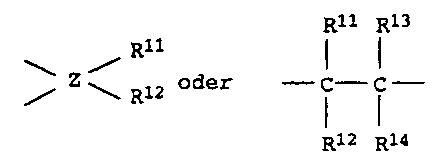 steht,
wobei Z Silicium, Germanium, Zinn oder Kohlenstoff bedeutet, und
R¹¹,R¹², R^{13,} R¹⁴ Wasserstoff, C₁- bis C₁₀-Alkyl, C₃- bis C₁₀-Cycloalkyl oder C₆- bis C₁₅-Aryl, wobei gegebenenfalls auch zwei benachbarte Reste gemeinsam für 4 bis 15 C-Atome aufweisende cyclische Gruppen stehen können,
**dadurch gekennzeichnet, daß** man Verbindungen der allgemeinen Formel II 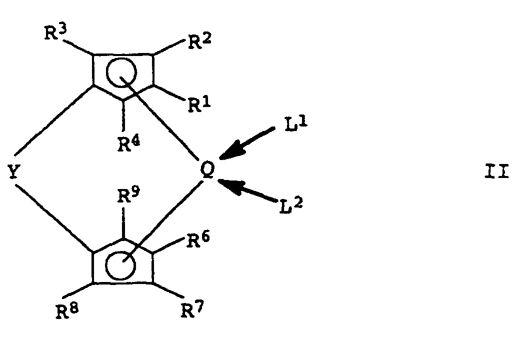 in der
Q für Beryllium, Magnesium, Calcium, Strontium oder Barium steht, und
L¹ und L² Lewis-Basen bedeuten
mit Verbindungen der allgemeinen Formel III 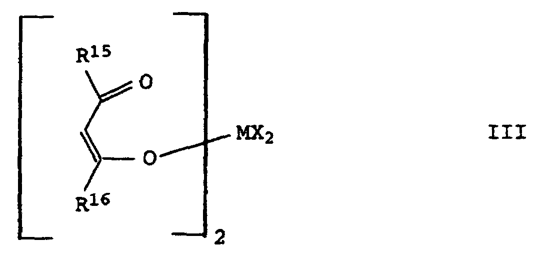 in der
R¹⁵ und R¹⁶ C₁- bis C₁₀-Alkyl, C₃- bis C₁₀-Cycloalkyl oder C₆- bis C₁₅-Aryl bedeuten,
umsetzt.

2. Verbindungen der allgemeinen Formel II 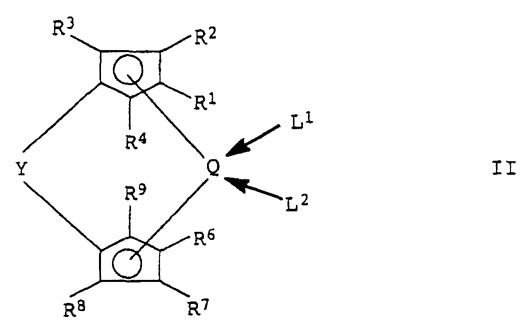 in der die Substituenten folgende Bedeutung haben:
R¹ bis R⁴ und R⁶ bis R⁹ Wasserstoff, C₁- bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁰)₃ mit
R¹⁰ C₁- bis C₁₀-Alkyl, C₆- bis C₁₅-Aryl oder C₃- bis C₁₀-Cycloalkyl
Y für 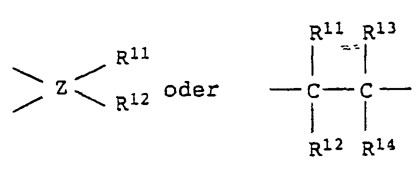 steht,
wobei Z Silicium, Germanium, Zinn oder Kohlenstoff bedeutet, und
R¹¹,R¹²,R¹³,R¹⁴ Wasserstoff, C₁- bis C₁₀-Alkyl, C₃- bis C₁₀-Cycloalkyl oder C₆- bis C₁₅-Aryl, wobei gegebenenfalls auch zwei benachbarte Reste gemeinsam für 4 bis 15 C-Atome aufweisende cyclische Gruppen stehen können
Q für Beryllium, Magnesium, Calcium, Strontium oder Barium steht und
L¹ und L² Lewis-Basen bedeuten.

3. Verfahren zur Herstellung von Verbindungen der allgemeinen Formel II gemäß Anspruch 2, **dadurch gekennzeichnet, daß** man Verbindungen der allgemeinen Formel IV 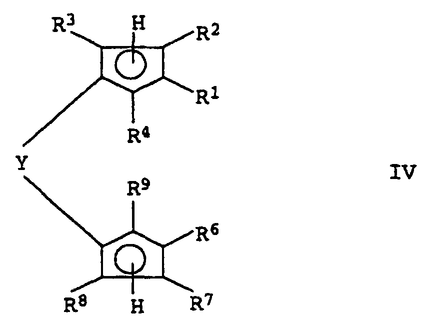 mit Verbindungen der allgemeinen Formel V
R¹⁷ - Q - R¹⁸ V
in der
R¹⁷ und R¹⁸ für Wasserstoff, C₁- bis C₁₀-Alkyl, C₃- bis C₁₀-Cycloalkyl, C₆- bis C₁₅-Aryl, Alkylaryl oder Arylalkyl mit jeweils 1 bis 10 C-Atomen im Alkylrest und 6 bis 20 C-Atomen im Arylrest stehen
und mit Lewis-Basen L¹ und L² umsetzt.

4. Verwendung von Verbindungen der allgemeinen Formel II gemäß Anspruch 2 zur Herstellung von Metallocenkomplexen der allgemeinen Formel I.

## Claims

1. A process for preparing metallocene complexes of the general formula I 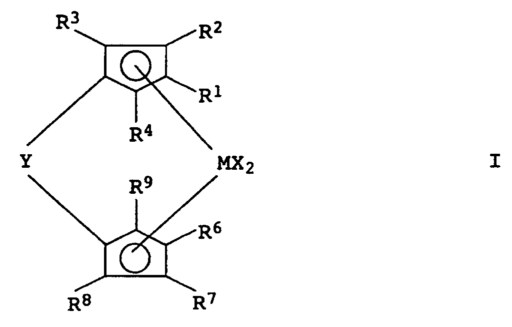 in which the substituents have the following meanings:
M is titanium, zirconium, hafnium, vanadium, niobium or tantalum,
x is fluorine, chlorine, bromine, iodine, hydrogen, C₁-C₁₀-alkyl, C₆-C₁₅-aryl or -OR⁵,
where R⁵ is C₁-C₁₀-alkyl, C₆-C₁₅-aryl, alkylaryl, arylalkyl, fluoroalkyl or fluoroaryl with, in each case, 1 to 10 carbon atoms in the alkyl radical and 6 to 20 carbon atoms in the aryl radical,
R¹ to R⁴ and R⁶ to R⁹ are hydrogen, C₁-C₁₀-alkyl, 5- to 7-membered cycloalkyl which can in turn carry C₁-C₁₀-alkyls as substituents, or C₆-C₁₅-aryl or arylalkyl, it also being possible where appropriate for two adjacent radicals together to be cyclic groups having 4 to 15 carbon atoms, or Si(R¹⁰)₃ with
R¹⁰ being C₁-C₁₀-alkyl, C₆-C₁₅-aryl or C₃-C₁₀-cycloalkyl,
Y is 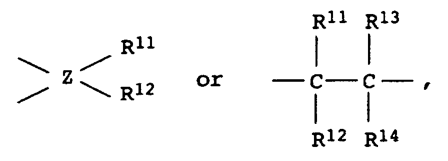
where Z is silicon, germanium, tin or carbon, and
R¹¹,R¹²,R¹³ and R¹⁴ are hydrogen, C₁-C₁₀-alkyl, C₃-C₁₀-cycloalkyl or C₆-C₁₅-aryl, it also being possible where appropriate for two adjacent radicals together to be cyclic groups having 4 to 15 carbon atoms,
which comprises reacting compounds of the general formula II 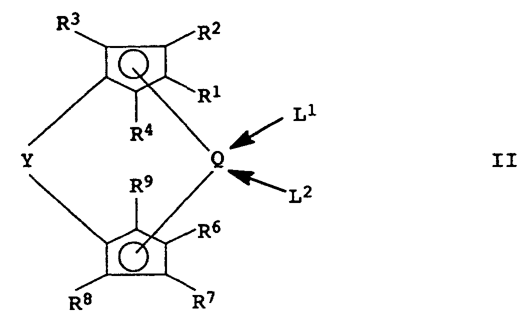 where
Q is beryllium, magnesium, calcium, strontium or barium, and
L¹ and L² are Lewis bases
with compounds of the general formula III 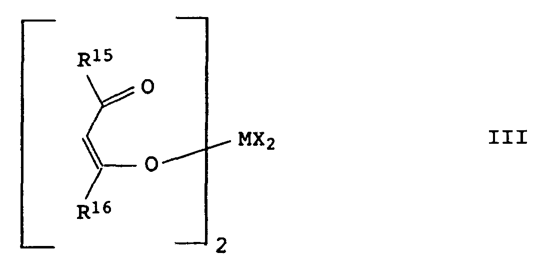 where
R¹⁵ and R¹⁶ are C₁-C₁₀-alkyl, C₃-C₁₀-cycloalkyl or C₆-C₁₅-aryl.

2. A compound of the formula II 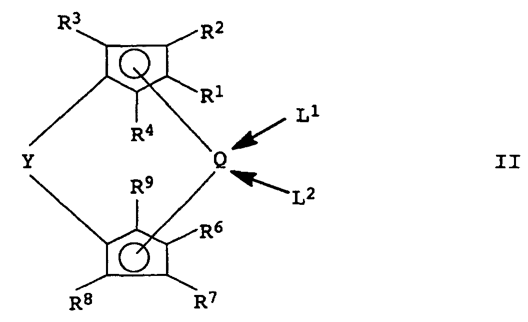 in which the substituents have the following meanings:
R¹ to R⁴ and R⁶ to R⁹ are hydrogen, C₁-C₁₀-alkyl, 5- to 7-membered cycloalkyl which can in turn carry C₁-C₁₀-alkyls as substituents, or C₆-C₁₅-aryl or arylalkyl, it also being possible where appropriate for two adjacent radicals together to be cyclic groups having 4 to 15 carbon atoms, or Si(R¹⁰)₃ with
R¹⁰ being C₁-C₁₀-alkyl, C₆-C₁₅-aryl or C₃-C₁₀-cycloalkyl,
Y is 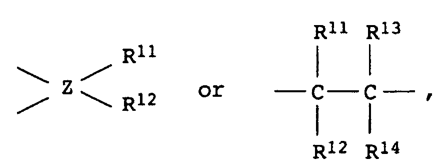
where Z is silicon, germanium, tin or carbon, and
R¹¹,R¹²,R¹³ and R¹⁴ are hydrogen, C₁-C₁₀-alkyl, C₃-C₁₀-cycloalkyl or C₆-C₁₅-aryl, it also being possible where appropriate for two adjacent radicals together to be cyclic groups having 4 to 15 carbon atoms,
Q is beryllium, magnesium, calcium, strontium or barium, and
L¹ and L² are Lewis bases.

3. A process for preparing compounds of the general formula II as claimed in claim 2, which comprises reacting compounds of the general formula IV 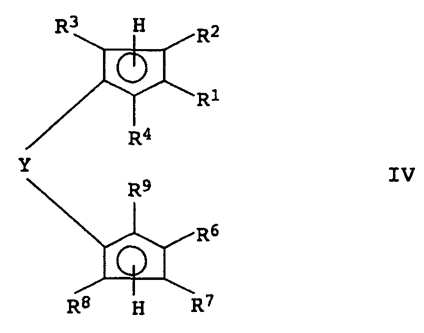 with compounds of the general formula V
R¹⁷ - Q - R¹⁸ V
where
R¹⁷ and R¹⁸ are hydrogen, C₁-C₁₀-alkyl, C₃-C₁₀-cycloalkyl, C₆-C₁₅-aryl, alkylaryl or arylalkyl with, in each case, 1 to 10 carbon atoms in the alkyl radical and 6 to 20 carbon atoms in the aryl radical,
and with Lewis bases L¹ and L².

4. The use of compounds of the general formula II as claimed in claim 2 for preparing metallocene complexes of the general formula I.

## Revendications

1. Procédé pour la préparation de complexes de métallocène de formule générale I 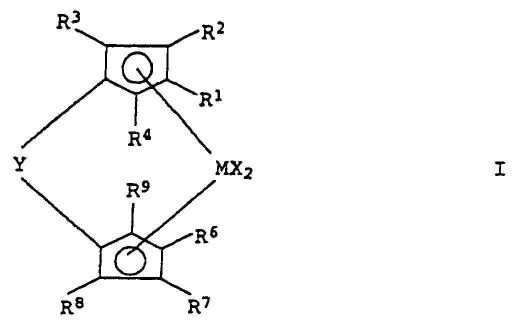 dans laquelle les substituants ont la signification suivante:
M titane, zirconium, hafnium, vanadium, niobium ou tantale,
X fluor, chlore, brome, iode, hydrogène, alkyle en C₁ à C₁₀, aryle en C₆ à C₁₅ ou -OR⁵,
tandis que R⁵ désigne un groupe alkyle en C₁ à C₁₀, aryle en C₆ à C₁₅, alkylaryle, arylalkyle, fluoroalkyle ou fluoroaryle ayant à chaque fois 1 à 10 atomes de carbone dans le reste alkyle et 6 à 20 atomes de carbone dans le reste aryle,
R¹ à R⁴ et R⁶ à R⁹ hydrogène, alkyle en C₁ à C₁₀, cycloalkyle ayant 5 à 7 chaînons, qui peut à son tour porter des alkyles en C₁ à C₁₀ comme substituants, aryle en C₆ à C₁₅ ou arylalkyle, tandis qu'éventuellement également deux restes voisins peuvent constituer ensemble des groupes cycliques présentant 4 à 15 atomes de carbone, ou Si(R¹⁰)₃ avec
R¹⁰ alkyle en C₁ à C₁₀, aryle en C₆ à C₁₅ ou cycloalkyle en C₃ à C₁₀,
Y 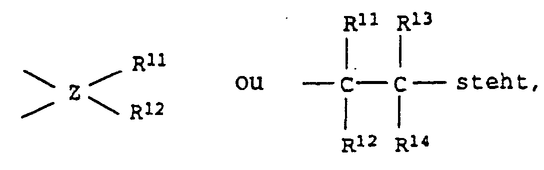
tandis que Z désigne le silicium, le germanium, l'étain ou le carbone, et
R¹¹, R¹², R¹³, R¹⁴ représentent l'hydrogène ou un groupe alkyle en C₁ à C₁₀, cycloalkyle en C₃ à C₁₀ ou aryle en C₆ à C₁₅, tandis qu'éventuellement également deux restes voisins peuvent constituer ensemble des groupes cycliques présentant 4 à 15 atomes de carbone,
**caractérisé par le fait qu'**on fait réagir des composés de formule générale II 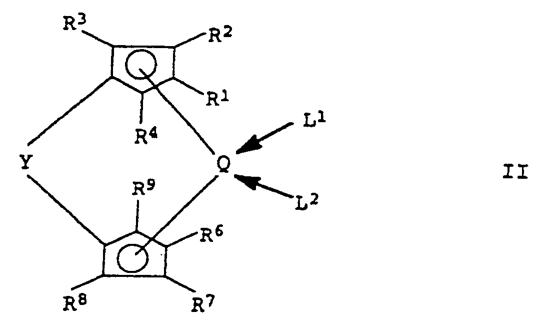 dans laquelle
Q désigne le béryllium, le magnésium, la calcium, le strontium ou le baryum, et
L¹ et L² représentent des bases de Lewis
avec des composés de formule générale III 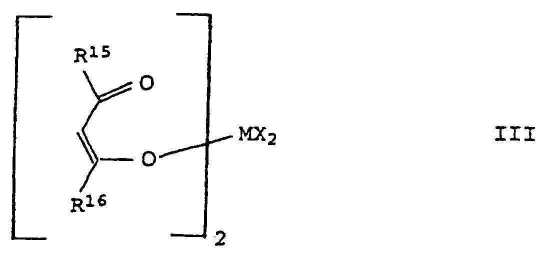 dans laquelle
R¹⁵ et R¹⁶ désignent un groupe alkyle en C₁ à C₁₀, cycloalkyle en C₃ à C₁₀ ou aryle en C₆ à C₁₅.

2. Composés de formule générale II 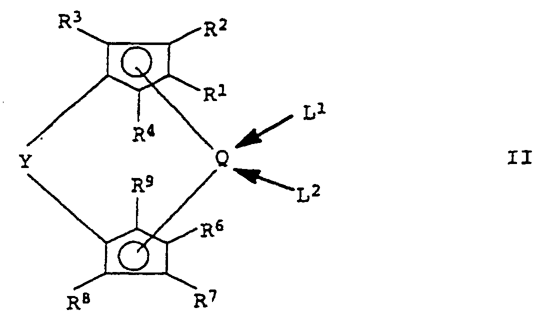 dans laquelle les substituants ont la signification suivante:
R¹ à R⁴ et R⁶ à R⁹ hydrogène, alkyle en C₁à C₁₀, cycloalkyle ayant 5 à 7 chaînons, qui peut à son tour porter des alkyles en C₁ à C₁₀ en tant que substituants, aryle en C₆ à C₁₅ ou arylalkyle, tandis qu'éventuellement également deux restes voisins peuvent constituer ensemble des groupes cycliques présentant 4 à 15 atomes de carbone, ou Si(R¹⁰)₃ avec
R¹⁰ alkyle en C₁ à C₁₀, aryle en C₆ à C₁₅ ou cycloalkyle en C₃ à C₁₀
Y désigne 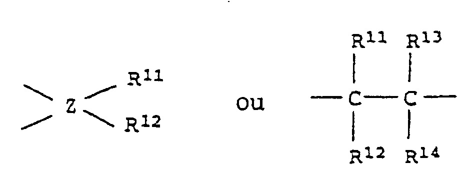 steht,
tandis que Z représente le silicium, le germanium, l'étain ou le carbone, et
R¹¹,R¹²,R¹³,R¹⁴ désignent l'hydrogène, un alkyle en C₁ à C₁₀, un cycloalkyle en C₃ à C₁₀ ou un aryle en C₆ à C₁₅, tandis qu'éventuellement également deux restes voisins peuvent constituer ensemble des groupes cycliques présentant 4 à 15 atomes de carbone,
Q désigne le béryllium, le magnésium, le calcium, le strontium ou le baryum, et
L¹ et L² représentent des bases de Lewis.

3. Procédé pour la préparation de composés de formule générale II selon la revendication 2, **caractérisé par le fait qu'**on fait réagir des composés de formule générale IV 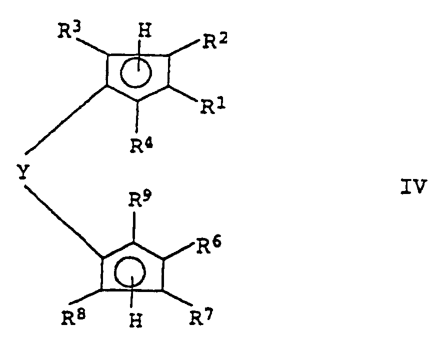 avec des composés de formule générale V
R¹⁷ - Q - R¹⁸ V
dans laquelle
R¹⁷ et R¹⁸ désignent l'hydrogène, un alkyle en C₁ à C₁₀, un cycloalkyle en C₃ à C₁₀, un aryle en C₆ à C₁₅, un alkylaryle ou un arylalkyle ayant à chaque fois 1 à 10 atomes de carbone dans le reste alkyle et 6 à 20 atomes de carbone dans le reste aryle,
et avec des bases de Lewis L¹ et L².

4. Utilisation de composés de formule générale II selon la revendication 2 pour la préparation de complexes de métallocène de formule générale I.
